# EUROPEAN PATENT SPECIFICATION

(11) **EP 3 937 357 B1**
(45) Date of publication and mention of the grant of the patent: **20.03.2024**
(21) Application number: 21184989.8
(22) Date of filing: 20.12.2018
(51) Int. Cl.: H02K 26/00, H01H 3/26

(54) **ACTUATOR FOR A MEDIUM VOLTAGE CIRCUIT BREAKER**
AKTUATOR FÜR EINEN MITTELSPANNUNGSSCHUTZSCHALTER
ACTIONNEUR POUR UN DISJONCTEUR MOYENNE TENSION

(43) Date of publication of application: 12.01.2022
(62) Divisional of application: 18214770.2
(73) Proprietor: ABB SCHWEIZ AG, 5400 Baden (CH)
(72) Inventor: SCHINDLER, Thorsten, 69198 Schriesheim (DE); MORELLI, Emanuele, 24052 Azzano San Paolo (IT); BUCHH, Maria, 24010 Sorisole (IT); WALDI, Wolfgang, 69226 Nußloch-Maisbach (DE); TUEYSUEZ, Arda, 64295 Darmstadt (DE); BREISCH, Sebastian, 69239 Neckarsteinach (DE); NITSCH, Claus, 68649 Groß-Rohrheim (DE); STAHL, Thomas, 74937 Spechbach (DE); REUTNER, Holger, 69214 Eppelheim (DE); MECHLER, Guenther, 74855 Haßmersheim (DE)
(74) Representative: Maiwald GmbH

(56) References cited:
- WO-A1-2004/066476
- US-A- 3 152 290
- US-A- 3 949 250

## Description

### FIELD OF THE INVENTION

The present invention relates to an actuator for a medium voltage circuit breaker, and to medium voltage circuit breaker having such an actuator.

### BACKGROUND OF THE INVENTION

WO2004/066476A1 relates to a single-phase electromagnetic actuator with limited working stroke, comprising a stator part consisting of at least 2N poles, N being an integer, excited by at least one excitation coil, and a mobile component including at least N mobile magnetized parts, having at least one stable current-free locking position, where the mobile part defines with respect to the stator part at least one main air gap of substantially constant thickness throughout the stroke, and at least one secondary air gap of variable thickness depending on the stroke.

The document US 3 152 290 A discloses an actuator comprising a rotary magnet.

Conventional medium voltage switchgear solutions use springs for opening and closing operations. However, this opening and closing behaviour cannot be influenced after assembly. Replacing the spring for the closing operation by an electromagnetic actuator allows for the control of the closing operation by means of current control.

In power distribution grids, with voltage levels between 10kV and 30kV, each distribution circuit is provided with a medium voltage switch that is opened in case of short circuit or overload or in case of maintenance work in the close environment of that circuit. An opening operation is usually done by the separation of the contact of two poles within a vacuum chamber thus causing the ignition of a vacuum arc carrying the circuit current in the form of ionized pole material. A fast separation of the poles and an appropriate chamber design help to interrupt the arc and thus the current. A closing operation should also be performed by a fast motion of at least one of the two poles of a phase. State of the art medium voltage circuit breakers use spring-driven actuators. These lack controllability. One potential drawback is that the mechanism is always actuated with the maximum available force, regardless of the speed requirement of a particular operation. A further drawback is that the operation behaviour may change under different environmental conditions and aging. Moreover, spring-driven actuators usually consist of many moving parts, making them prone to mechanical failure. An electromagnetic actuator is inherently controlled, meaning that the speed of each individual operation may be controlled by means of an electronic control unit. Therefore, electromagnetic actuators have been proposed for use in medium voltage circuit breakers. The challenges of an electromagnetic drive are primarily: Cost (competing with low-cost springs); High-torque requirement in compact volume (competing with very high force density of springs); Robustness (electronics are needed for controlled operation); and Modularity (current spring driven actuators can be mounted/unmounted with minimum disassembly of the circuit breaker. Similar modularity is expected from an alternative, electromagnetic drive.)

There is a need to address these issues.

### SUMMARY OF THE INVENTION

It would be advantageous to have an improved actuator for a medium voltage circuit breaker.

The object of the present invention is solved with the subject matter of the independent claims, wherein further embodiments are incorporated in the dependent claims.

In a first aspect, there is provided an actuator for a medium voltage circuit breaker as defined in appended claim 1.

In an embodiment of the application, there is provided an actuator for a medium voltage circuit breaker, the actuator comprising:
- at least one rotor;
- at least one stator; and
- at least one coil.

Each stator of the at least one stator is associated with a corresponding rotor of the at least one rotor. Each stator does not circumferentially completely encircle the rotor with which it is associated. Each coil of the at least one coil is associated with a stator of the at least one stator. Each coil is wound around at least a part of the stator with which it is associated. An angle of rotation of each rotor is limited.

In other words, an asymmetric limited angle rotating actuator is provided, which can for example be mounted on the main shaft of a circuit breaker, in contrast to the well-known structures of conventional rotary electromagnetic actuators. Such an asymmetric radial flux actuator can be mounted on already assembled shafts, and the rest of the switchgear does not need to be modified significantly.

In an example, a rotor of the at least one rotor is configured to rotate about an axis of rotation. The rotor comprises a first salient pole extending over an angle with respect to the axis of rotation and a second salient pole extending over an angle with respect to the axis of rotation. A stator of the at least one stator comprises a first stator pole extending over an angle with respect to the axis of rotation and a second stator pole extending over an angle with respect to the axis of rotation. In a closed position of the actuator the first salient pole faces the first stator pole and the second salient pole faces the second stator pole, and wherein the first salient pole, the second salient pole, the first stator pole and the second stator pole each comprise ferromagnetic material. Here reference to a coil, does not mean that there cannot be more than one coil.

In an example, the angle of rotation of the rotor with respect to the stator is limited by a driving electromagnetic force. In other words, a non-zero driving electromagnetic force can only be applied for a limited range of rotational positions of the rotor.

In an example, in an open position of the actuator, the first salient pole does not face the first stator pole and the second salient pole does not face the second stator pole. This means that the angular extent of the first salient pole does not substantially overlay the angular extent of the first stator pole and the angular extent of the second salient pole does not substantially overlay the angular extent of the second stator pole.

In an example, the rotor and stator are configured such that the first salient pole cannot face the second stator pole.

In an example, when the actuator is in the closed position a part of the first salient pole is positioned adjacent to a part of the second stator pole, and wherein a radius from the axis of rotation to the part of the first salient pole is greater than a radius from the axis of rotation to the part of the second stator pole.

In this way, the first salient pole cannot rotate to face the second stator pole.

According to the invention, the first salient pole is contiguous with the second salient pole.

In an example, when the actuator is in the closed position an angularly constant air gap separates the second salient pole from the second stator pole.

In an example, an outer surface of the second salient pole that faces the second stator pole has a radius of curvature and the outer surface of the second stator pole that faces the second salient pole has a radius of curvature. The radii of curvature share a common origin. Here, the outer surface of the second stator pole can also be referred to as a pole front.

In an example, the common origin of the radii of curvature is the axis of rotation.

In an example, when the actuator is in the closed position an angularly varying air gap separates the second salient pole from the second stator pole.

In an example, an outer surface of the second salient pole that faces the second stator pole has a radius of curvature and the outer surface of the second stator pole that faces the second salient pole has a radius of curvature. The radii of curvature do not share a common origin. Thus, in other words there is eccentricity.

In an example, a coil of the at least one coil is wrapped around at least a part of the first stator pole and/or the coil is wrapped around at least a part of the second stator pole.

In an example, a second rotor of the at least one rotor is configured to rotate about an axis of rotation. The rotor comprises a first salient pole extending over an angle with respect to the axis of rotation and a second salient pole extending over an angle with respect to the axis of rotation. A second stator of the at least one stator comprises a first stator pole extending over an angle with respect to the axis of rotation and a second stator pole extending over an angle. In the closed position of the actuator the first salient pole faces the first stator pole and the second salient pole faces the second stator pole; wherein the first salient pole, the second salient pole, the first stator pole and the second stator pole each comprise ferromagnetic material; and wherein the first salient pole (20) of the first rotor (10) faces away from the first salient pole of the second rotor, and the second salient pole (30) of the first rotor (10) faces away from the second salient pole of the second rotor.

In an example, the axis of rotation of the first rotor is the same as the axis of rotation of the second rotor.

In a second aspect, there is provided a medium voltage circuit breaker with at least one vacuum interrupter, each comprising moveable electrical contacts for electrical power interruption, operated via a main shaft to which is mounted an actuator according to the first aspect.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Figs. 1-2 show schematic examples of actuators for a medium voltage circuit breaker, where such actuators can also be referred to as electromagnetic actuators;
Fig. 3 shows a schematic example of the kinematic arrangement and motion during the closing operation of a medium voltage circuit breaker;
Figs. 4-5 show examples of an actuator mounted on the main shaft of a medium voltage circuit breaker; and
Fig. 6 shows schematic examples of actuators for a medium voltage circuit breaker.

### DETAILED DESCRIPTION OF EMBODIMENTS

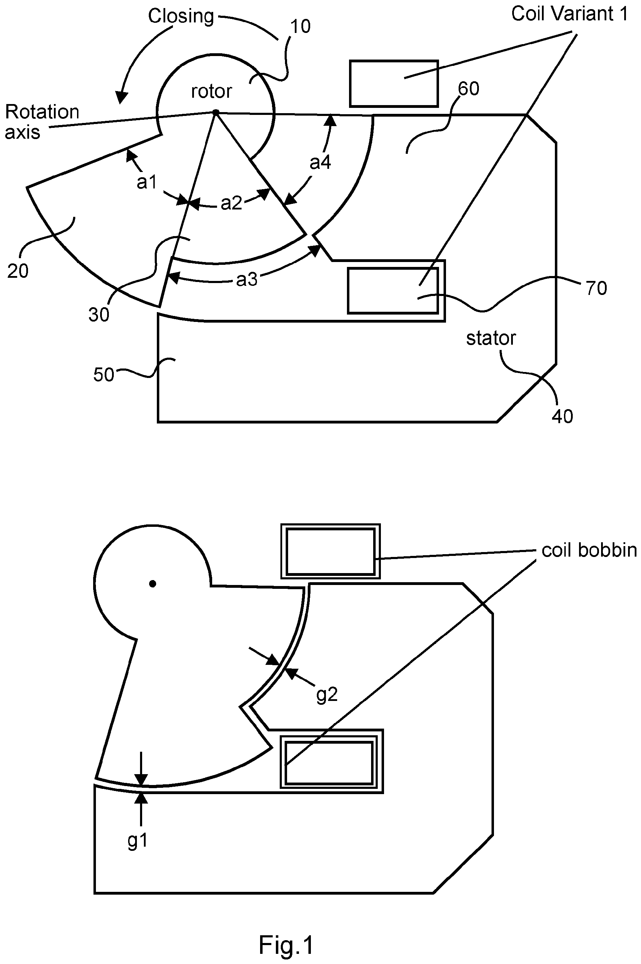

Figs. 1-6 show actuators for a medium voltage circuit breaker as provided here, and how they can operate with a medium voltage circuit breaker.

These figures show an actuator 1 for a medium voltage circuit breaker. The actuator comprises at least one rotor 10, 80, at least one stator 40, 90, and at least one coil 70, 100. Each stator of the at least one stator is associated with a corresponding rotor of the at least one rotor. Each stator does not circumferentially completely encircle the rotor with which it is associated. Each coil of the at least one coil is associated with a stator of the at least one stator. Each coil is wound around at least a part of the stator with which it is associated. An angle of rotation of each rotor is limited.

It is to be noted, that in an example the coil is wound around a stator such that free motion is not inhibited. Thus, the coil does not extend from the stator, or exceed the stator, such that free motion of the rotor is affected.

According to an example, the angle of rotation of the rotor with respect to the stator is limited by a driving electromagnetic force.

According to the invention, a rotor 10 of the at least one rotor is configured to rotate about an axis of rotation. The rotor comprises a first salient pole 20 extending over an angle (a1) with respect to the axis of rotation and a second salient pole 30 extending over an angle (a2) with respect to the axis of rotation. The sum of the angles a1 and a2 is less than 360 degrees, and when the rotor is stationary the two angles do not overlay the same area. A stator 40 of the at least one stator comprises a first stator pole 50 extending over an angle (a3) with respect to the axis of rotation and a second stator pole 60 extending over an angle (a4) with respect to the axis of rotation. The sum of the angles a3 and a4 is less than 360 degrees, and the two angles do not overlay the same area. In a closed position of the actuator the first salient pole faces the first stator pole and the second salient pole faces the second stator pole. The first salient pole, the second salient pole, the first stator pole and the second stator pole each comprise ferromagnetic material.

According to an example, in an open position of the actuator the first salient pole does not face the first stator pole and the second salient pole does not face the second stator pole. This means that the angular extent of the first salient pole does not substantially overlay the angular extent of the first stator pole and the angular extent of the second salient pole does not substantially overlay the angular extent of the second stator pole.

In an example, the angle (a1) over which the first salient pole extends is substantially the same magnitude as the angle (a3) over which the first stator pole extends.

In an example, the angle (a2) over which the second salient pole extends is substantially the same magnitude as the angle (a4) over which the second stator pole extends.

According to an example, the rotor and stator are configured such that the first salient pole cannot face the second stator pole.

According to an example, when the actuator is in the closed position a part of the first salient pole is positioned adjacent to a part of the second stator pole. A radius from the axis of rotation to the part of the first salient pole is greater than a radius from the axis of rotation to the part of the second stator pole.

Acceding to the invention, the first salient pole is contiguous with the second salient pole.

According to an example, when the actuator is in the closed position an angularly constant air gap separates the second salient pole from the second stator pole.

According to an example, an outer surface of the second salient pole that faces the second stator pole has a radius of curvature and the outer surface of the second stator pole that faces the second salient pole has a radius of curvature. In this example, the radii of curvature share a common origin.

According to an example, the common origin of the radii of curvature is the axis of rotation.

According to an example, when the actuator is in the closed position an angularly varying air gap separates the second salient pole from the second stator pole.

According to an example, an outer surface of the second salient pole that faces the second stator pole has a radius of curvature and the outer surface of the second stator pole that faces the second salient pole has a radius of curvature. In this example, the radii of curvature do not share a common origin. In other words, there is eccentricity.

In an example, the origin of the radius of curvature of the outer surface of the second salient pole is the axis of rotation or the origin of the radius of curvature of the outer surface of the second stator pole is the axis of rotation.

According to an example, a coil of the at least one coil is wrapped around at least a part of the first stator pole and/or the coil is wrapped around at least a part of the second stator pole.

In an example, the stator comprises a ferromagnetic yoke configured to guide magnetic flux from a first stator pole front to a second stator pole front.

According to an example, a second rotor 80 of the at least one rotor is configured to rotate about an axis of rotation. The rotor comprises a first salient pole extending over an angle with respect to the axis of rotation and a second salient pole extending over an angle with respect to the axis of rotation. The sum of the angles is less than 360 degrees, and when the rotor is stationary the two angles do not overlay the same area. A second stator 90 of the at least one stator comprises a first stator pole extending over an angle with respect to the axis of rotation and a second stator pole extending over an angle with respect to the axis of rotation. The sum of the angles is less than 360 degrees, and the two angles do not overlay the same area. In the closed position of the actuator the first salient pole faces the first stator pole and the second salient pole faces the second stator pole. The first salient pole, the second salient pole, the first stator pole and the second stator pole each comprise ferromagnetic material. The first salient pole 20 of the first rotor 10 faces away from the first salient pole of the second rotor, and the second salient pole 30 of the first rotor 10 faces away from the second salient pole of the second rotor.

According to an example, the axis of rotation of the first rotor is the same as the axis of rotation of the second rotor.

In an example, in the open position of the actuator the first salient pole does not face the first stator pole and the second salient pole does not face the second stator pole.

In an example, the axis of rotation of the first rotor is not the same as the axis of rotation of the second rotor.

The figures also show a medium voltage circuit breaker with at least one vacuum interrupter, each comprising moveable electrical contacts for electrical power interruption, operated via a main shaft to which is mounted an actuator as described above.

In an example, the angle over which the first salient pole of the second rotor extends is substantially the same as the angle over which the first stator pole of the second stator extends.

In an example, the angle over which the second salient pole of the second rotor extends is substantially the same as the angle over which the second stator pole of the second stator extends.

In an example, the second rotor and second actuator are configured such that the first salient pole cannot face the second stator pole.

In an example, when the actuator is in the closed position a part of the first salient pole of the second rotor is positioned adjacent to a part of the second stator pole of the second stator, and wherein a radius from the axis of rotation to the part of the first salient pole is greater than a radius from the axis of rotation to the part of the second stator pole.

In an example, the first salient pole of the second rotor is contiguous with the second salient pole of the second rotor.

In an example, when the actuator is in the closed position an angularly constant air gap separates the second salient pole of the second rotor from the second stator pole of the second stator.

In an example, an outer surface of the second salient pole of the second rotor that faces the second stator pole of the second stator has a radius of curvature and the outer surface of the second stator pole of the second stator that faces the second salient pole of the second rotor has a radius of curvature, and wherein the radii of curvature share a common origin.

In an example, the common origin of the radii of curvature is the axis of rotation.

In an example, when the actuator is in the closed position an angularly varying air gap separates the second salient pole of the second rotor from the second stator pole of the second stator.

In an example, an outer surface of the second salient pole of the second rotor that faces the second stator pole of the second stator has a radius of curvature and the outer surface of the second stator pole of the second stator that faces the second salient pole of the second rotor has a radius of curvature, and wherein the radii of curvature do not share a common origin. In other words, there is eccentricity.

In an example, the origin of the radius of curvature of the outer surface of the second salient pole of the second rotor is the axis of rotation or the origin of the radius of curvature of the outer surface of the second stator pole of the second stator is the axis of rotation.

In an example, a second coil 100 of the at least one coil is wrapped around at least a part of the first stator pole of the second stator and/or the coil is wrapped around at least a part of the second stator pole of the second stator.

In an example, the second stator comprises a ferromagnetic yoke configured to guide magnetic flux from a first stator pole front to a second stator pole front.

In an example, the stator is configured to be fixed onto a circuit breaker housing in a modular manner, and wherein bearings are separated in two parts.

In an example, the bearings are plastic.

In an example, the bearings are metal.

The challenges of an electromagnetic actuator within the context of medium voltage switchgear are tackled with the present actuator described with respect to Figs. 1-6 by using an asymmetric, limited angle rotating actuator that can be mounted onto the main shaft of a circuit breaker. The actuator's stator extends laterally without covering the rotor completely in the circumferential direction. This is in contrast to the well-known structures of conventional rotary electromagnetic motors or actuators, where a stator covers a rotor completely. Having the stator extend only laterally without covering the whole circumference of the main shaft enables a high level of modularity: the actuator can be mounted on already assembled main shafts. The limited rotational stroke makes it possible to use a single-phase actuator, thereby eliminating the need of a multi-phase electronic controller (as opposed to motor drives, described for example in the paper by P. Bertolotto, M. Bonaconsa, L. Chenet, M. Riva, F. Viaro: The future evolution of medium voltage circuit breakers: new developments and possible applications, CIGRE 2018, Paper A3-304 ). This decreases the cost and increases the reliability at the same time.

Continuing with Fig. 1 a rotor made of soft ferromagnetic material such as steel has an asymmetrical geometry around its axis of rotation, arranged in a way to form magnetically salient poles. A stator, also made of soft ferromagnetic material, covers only a section of the rotor's circumference.

The rotor comprises a first salient pole circular sector with angle a1 (a radially longer rotor sector) and a second salient pole circular sector with angle a2 (a radially shorter rotor sector). The radially longer rotor sector and the radially shorter rotor sector touch each other without an angular gap.

The stator comprises a first stator pole front at a radius that exceeds the radius of the longer rotor segment rotor by at least a distance g1. The first stator also comprises a second stator pole front at a radius that exceeds the radius of the shorter rotor segment by at least g2. The stator also comprises a stator yoke that guides the magnetic flux from the first stator pole front to the second stator pole front.

With respect to the actuator, g1 is the minimum gap width between the first stator pole front and the first rotor section at their overlapping angular range, whilst g2 is the minimum air gap width between the inner stator pole front and the shorter rotor section at their overlapping angular range.

As shown in Fig. 1 a coil is wound around the yoke body between the two pole faces. The electrical current flowing in this coil generates the magnetic flux in the stator yoke, the flux changing from the first stator pole front to the longer rotor sector crossing the air gap ≥ g1, then the flux being redirected in the rotor to the shorter section rotor pole front changing to the second stator pole front crossing an air gap ≥ g2, then the flux path recloses in the yoke.

When the rotor is located at the starting open position, where the rotor and stator poles have a minimum overlap (see Fig. 1, at the top), the resulting torque acting on the rotor generates an angular acceleration in the direction of larger angular overlap (see Fig. 1, at the bottom).

The bottom image in Fig. 1 depicts a special arrangement of the coil with a rectangular cross section, in which the coil is wound on a plastic bobbin before being inserted in its operational position. This makes the manufacturing and the assembly easier compared to winding the coil directly on the stator pole. This, however, implies that the opening between the two stator pole fronts has to have enough space to be able to insert the coil that is wound on the bobbin. If a smaller gap between the stator pole fronts is advantageous for the magnetic design for a given torque profile over a given angular stroke, then the coil can be wound directly on the stator pole, trading simpler manufacturing for more favorable torque profile.

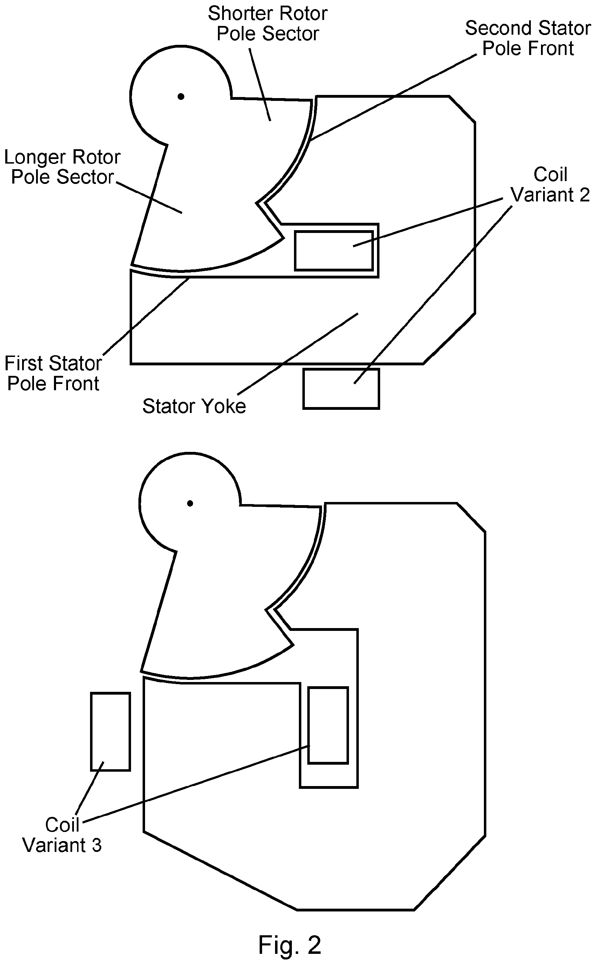

Fig. 1 shows a coil wound around the upper stator pole. However, the coil can also be wound around the lower stator pole to achieve the same effect (see Fig. 2, at the top). It is however possible to arrange the coils in various directions, and not just around a horizontal axis, that provide an advantageous shape for fitting the actuator in a confined space, as long as the pole front shapes of the rotor and the stator follow the description given above. Fig. 2, at the bottom shows an example of this, where the pole front shapes are kept the same, and the stator shape is modified with a coil wound around a vertical axis. It is also possible to have an actuator with two coils, one wound on each stator pole. The two coils would then be electrically connected either in series or in parallel, such that the coil sides of each coil that lie between the two stator poles carry current in the same direction. The coil arrangement has the advantage of shorter end windings. This means that within the same axial space, the actuator with two coils may have axially longer rotor and stator cores, and feature a higher torque output. On the other hand, the space needed between the coils located between the stator poles (e.g. for fitting the bobbins, or for insulating the coils, or for easy insertion/winding of the coils) decreases the total cross section area available for the coils.

The stator and rotor cores can be advantageously manufactured as isolated sheet metals (laminations), as is well known from transformers or rotary electrical machines. Individual sheet thickness can vary between 0.1mm to 2mm in typical examples. This reduces the eddy currents in the cores, thereby increasing the efficiency and the dynamic performance. However, in order to reduce the costs, the actuator presented here may also be manufactured using solid blocks.

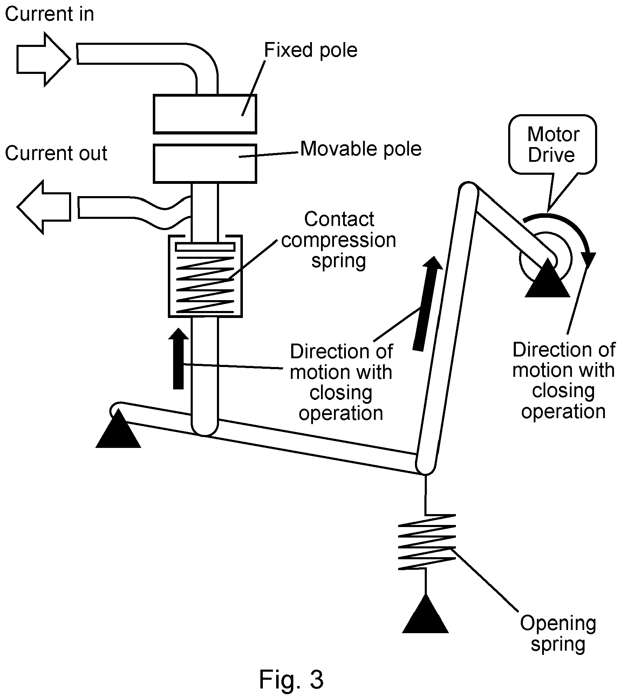

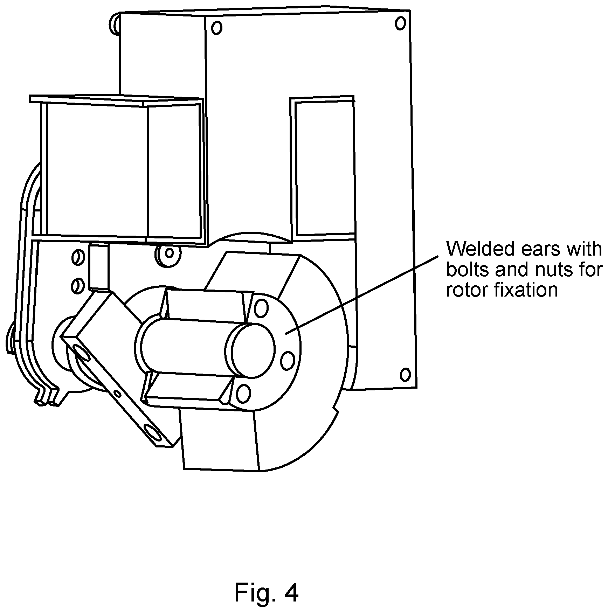

As shown in Fig. 3 the actuator described so far is particularly well suited for the actuation of a medium voltage circuit breaker, since it can be mounted directly on the main shaft and fit in the existing circuit breaker housing. Fig. 3 shows an example of the kinematic arrangement and motion during the closing operation of a medium voltage circuit breaker, actuated by the above mentioned electromagnetic actuator. The rotor of the actuator can be fixed onto the main shaft via any kind of form fit. Welded protrusions of the main shaft with holes are fixed with bolts and nuts to the rotor that also is prepared with respective holes (as shown in Fig. 4). In this way a modular usage is ensured. The relative position of the rotor-stator depends upon the orientation/position of the main shaft protrusions and is chosen in an optimal way for meeting the load torque characteristics.

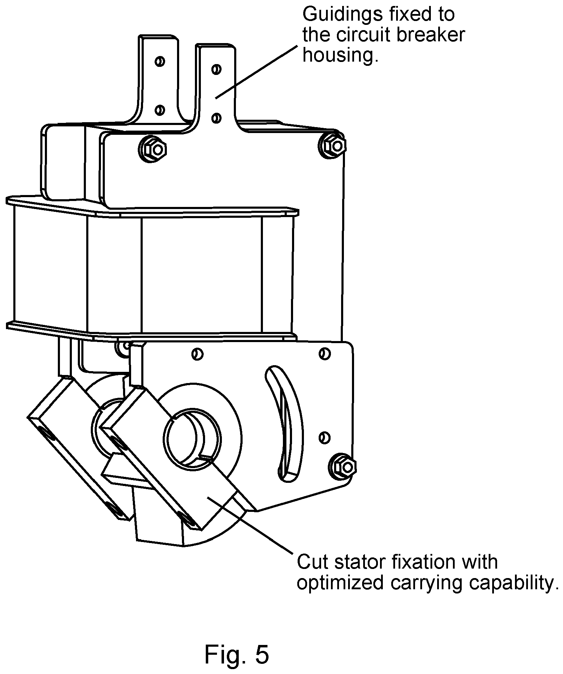

The stator of the actuator can be fixed onto the circuit breaker housing in a modular way. Therefore, bearings are separated in two parts. The asymmetric nature of the actuator allows for the modularity but is also responsible for radial electromagnetic forces, which have to be carried by the bearings. The separation direction is optimized with respect to the main load direction (as shown in Fig. 5). An embodiment can utilize commercially available plastic bearings, where both the carrying separation parts and the sliding inlets can be made of plastic solutions, which are commercially available. An embodiment can however utilize metal bearings, where the carrying separation parts are made of aluminum or stainless steel, and the inlets are made of brass. This improves the load carrying capability if needed.

The relative rotation of the stator with respect to the rotor is guaranteed with simple guidings fixed to the circuit breaker housing (as shown in Fig. 5). To put this another way, as the stator does not move during actuation the rotational angle or angular position of the stator relative to the rotor is guaranteed in this manner. The axial position is less loaded, where a simple clip ensures the position. The direct drive nature of this arrangement (mounting the rotor actuator directly on the main shaft) avoids the use of additional linkages, thereby decreasing the cost and increasing the compactness and reliability.

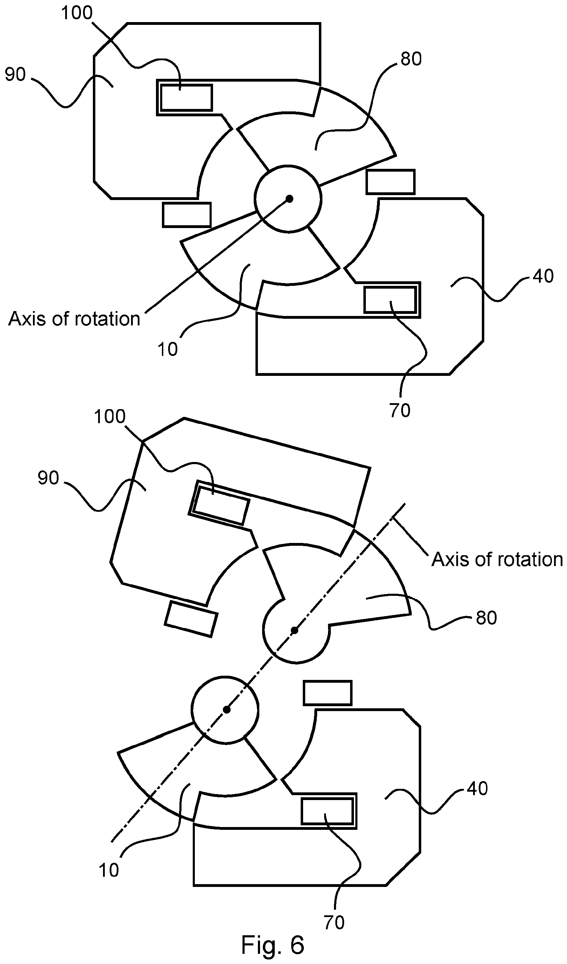

Fig. 6 shows examples of multiple actuators. In order to maximize the torque output in a confined space, it can be advantageous to use multiple actuators, displaced circumferentially around the same axis of rotation (see Fig. 6, on top). Alternatively, the actuators may also be axially displaced (see Fig. 6, bottom), if this allows a better fitting of the actuators in the available space around the axis of rotation. The coils of the individual actuators can be energized by individual power electronic control units, or more advantageously, can be connected electrically in series and/or parallel, and can be energized by a single power electronic control unit. Multiple actuators on the same shaft brings a new level of modularity, such that for applications requiring a higher torque (e.g. circuit breakers with higher current ratings) more than one of the same actuator can be used. This decreases the number of variants within the manufacturing line and significantly increases the production output.

In some the examples, the rotor and stator feature no eccentricity by design. In other words, the surfaces of the rotor and stator poles fronts facing each other lie on two coaxial circles, the center of both lying on the axis of the main shaft. The radial air gap is equal to the difference of the radii of those circles, and it is constant within the overlapping region of the rotor and stator poles both in the axial and circumferential directions. In a further variant, an eccentricity defined by the design of the rotor and stator pole front shapes implies a circumferentially varying air gap. This can be achieved by arranging the pole front shape to follow circles, whose centers do not coincide with the axis of rotation, for at least one of the pairing rotor/stator pole front surfaces. For example, a decreasing radial air gap for at least one of the pairing rotor and stator pole front surfaces as the rotor rotates from the starting to the final position results in an increase of the torque towards the end of the stroke (assuming constant current flowing in the coils). In a circuit breaker application, this corresponds to the behavior of the load torque, which is significantly higher in the final contact spring compression phase of the closing operation than in the early free travel phase. All the embodiments mentioned above can also be achieved by an actuator that features such eccentricity.

### Reference numerals

1: Actuator
10: First rotor
20: First salient pole
30: Second salient pole
40: First stator
50: First stator pole
60: Second stator pole
70: First coil
80: Second rotor
90: Second stator
100: Second coil

## Claims

1. An actuator (1) for a medium voltage circuit breaker, the actuator comprising:
- at least one rotor (10, 80);
- at least one stator (40, 90); and
- at least one coil (70, 100);
wherein, each stator of the at least one stator is associated with a corresponding rotor of the at least one rotor;
wherein, each stator does not circumferentially completely encircle the rotor with which it is associated; and
wherein, each coil of the at least one coil is associated with a stator of the at least one stator;
wherein, each coil is wound around at least a part of the stator with which it is associated;
wherein, an angle of rotation of each rotor is limited;
wherein a rotor (10) of the at least one rotor is configured to rotate about an axis of rotation; wherein the rotor comprises a first salient pole (20) extending over an angle (a1) with respect to the axis of rotation and a second salient pole (30) extending over an angle (a2) with respect to the axis of rotation; wherein a stator (40) of the at least one stator comprises a first stator pole (50) extending over an angle (a3) with respect to the axis of rotation and a second stator pole (60) extending over an angle (a4) with respect to the axis of rotation; wherein in a closed position of the actuator the first salient pole faces the first stator pole and the second salient pole faces the second stator pole, and wherein the first salient pole, the second salient pole, the first stator pole and the second stator pole each comprise ferromagnetic material;
**characterized in that** the first salient pole is circumferentially contiguous with the second salient pole.

2. Actuator according to claim 1, wherein the angle of rotation of the rotor with respect to the stator is limited by a driving electromagnetic force.

3. Actuator according to any of claims 1-2, wherein in an open position of the actuator the first salient pole does not face the first stator pole and the second salient pole does not face the second stator pole, such that the angular extent of the first salient pole does not substantially overlay the angular extent of the first stator pole and the angular extent of the second salient pole does not substantially overlay the angular extent of the second stator pole.

4. Actuator according to any of claims 1-3, wherein the rotor and stator are configured such that the first salient pole cannot face the second stator pole.

5. Actuator according to any of claims 1-4, wherein when the actuator is in the closed position a part of the first salient pole is positioned adjacent to a part of the second stator pole, and wherein a radius from the axis of rotation to the part of the first salient pole is greater than a radius from the axis of rotation to the part of the second stator pole.

6. Actuator according to any of claims 1-5, wherein when the actuator is in the closed position an angularly constant air gap separates the second salient pole from the second stator pole.

7. Actuator according to claim 6, wherein an outer surface of the second salient pole that faces the second stator pole has a radius of curvature and the outer surface of the second stator pole that faces the second salient pole has a radius of curvature, and wherein the radii of curvature share a common origin.

8. Actuator according to claim 7, wherein the common origin of the radii of curvature is the axis of rotation.

9. Actuator according to any of claims 1-5, wherein when the actuator is in the closed position an angularly varying air gap separates the second salient pole from the second stator pole.

10. Actuator according to claim 9, wherein an outer surface of the second salient pole that faces the second stator pole has a radius of curvature and the outer surface of the second stator pole that faces the second salient pole has a radius of curvature, and wherein the radii of curvature do not share a common origin.

11. Actuator according any of claims 1-10, wherein a coil of the at least one coil is wrapped around at least a part of the first stator pole and/or the coil is wrapped around at least a part of the second stator pole.

12. Actuator according to any of claims 1-11, wherein a second rotor (80) of the at least one rotor is configured to rotate about an axis of rotation; wherein the rotor comprises a first salient pole extending over an angle with respect to the axis of rotation and a second salient pole extending over an angle with respect to the axis of rotation; wherein a second stator (90) of the at least one stator comprises a first stator pole extending over an angle with respect to the axis of rotation and a second stator pole extending over an angle; wherein in the open position of the actuator the first salient pole does not face the first stator pole and the second salient pole does not face the second stator pole; wherein in the closed position of the actuator the first salient pole faces the first stator pole and the second salient pole faces the second stator pole; wherein the first salient pole, the second salient pole, the first stator pole and the second stator pole each comprise ferromagnetic material; and wherein the first salient pole (20) of the first rotor (10) faces away from the first salient pole of the second rotor, and the second salient pole (30) of the first rotor (10) faces away from the second salient pole of the second rotor.

13. Actuator according to claim 12, wherein the axis of rotation of the first rotor is the same as the axis of rotation of the second rotor.

14. A medium voltage circuit breaker with at least one vacuum interrupter, each comprising at least one moveable electrical contact for electrical power interruption, operated via a main shaft to which is mounted an actuator according to any of claims 1-13.

## Patentansprüche

1. Aktuator (1) für einen Mittelspannungs-Leistungsschalter, wobei der Aktuator umfasst:
- mindestens einen Rotor (10, 80);
- mindestens einen Stator (40, 90) und
- mindestens eine Spule (70, 100);
wobei jeder Stator des mindestens einen Stators einem entsprechenden Rotor des mindestens einen Rotors zugeordnet ist;
wobei jeder Stator den zugeordneten Rotor in Umfangsrichtung nicht vollständig umgibt; und
wobei jede Spule der mindestens einen Spule einem Stator des mindestens einen Stators zugeordnet ist;
wobei jede Spule um mindestens einen Teil des zugeordneten Stators gewickelt ist;
wobei ein Drehwinkel jedes Rotors begrenzt ist;
wobei ein Rotor (10) des mindestens einen Rotors dazu ausgelegt ist, sich um eine Drehachse zu drehen; wobei der Rotor einen ersten ausgeprägten Pol (20), der sich über einen Winkel (a1) in Bezug auf die Drehachse erstreckt, und einen zweiten ausgeprägten Pol (30), der sich über einen Winkel (a2) in Bezug auf die Drehachse erstreckt, umfasst; wobei ein Stator (40) des mindestens einen Stators einen ersten Statorpol (50), der sich über einen Winkel (a3) in Bezug auf die Drehachse erstreckt, und einen zweiten Statorpol (60), der sich über einen Winkel (a4) in Bezug auf die Drehachse erstreckt, umfasst; wobei in einer geschlossenen Stellung des Aktuators der erste ausgeprägte Pol dem ersten Statorpol zugewandt ist und der zweite ausgeprägte Pol dem zweiten Statorpol zugewandt ist, und wobei der erste ausgeprägte Pol, der zweite ausgeprägte Pol, der erste Statorpol und der zweite Statorpol jeweils ferromagnetisches Material umfassen;
**dadurch gekennzeichnet, dass** der erste ausgeprägte Pol in Umfangsrichtung direkt an den zweiten ausgeprägten Pol angrenzt.

2. Aktuator gemäß Anspruch 1, wobei der Drehwinkel des Rotors in Bezug auf den Stator durch eine antreibende elektromagnetische Kraft begrenzt wird.

3. Aktuator gemäß einem der Ansprüche 1-2, wobei in einer offenen Stellung des Aktuators der erste ausgeprägte Pol nicht dem ersten Statorpol zugewandt ist und der zweite ausgeprägte Pol nicht dem zweiten Statorpol zugewandt ist, sodass die Winkelausdehnung des ersten ausgeprägten Pols nicht wesentlich die Winkelausdehnung des ersten Statorpols überlagert und die Winkelausdehnung des zweiten ausgeprägten Pols nicht wesentlich die Winkelausdehnung des zweiten Statorpols überlagert.

4. Aktuator gemäß einem der Ansprüche 1-3, wobei der Rotor und der Stator so ausgelegt sind, dass der erste ausgeprägte Pol nicht dem zweiten Statorpol zugewandt sein kann.

5. Aktuator gemäß einem der Ansprüche 1-4, wobei, wenn der Aktuator in der geschlossenen Stellung ist, ein Teil des ersten ausgeprägten Pols angrenzend an ein Teil des zweiten Statorpols positioniert ist, und wobei ein Radius von der Drehachse zu dem Teil des ersten ausgeprägten Pols größer als ein Radius von der Drehachse zu dem Teil des zweiten Statorpols ist.

6. Aktuator gemäß einem der Ansprüche 1-5, wobei in der geschlossenen Stellung des Aktuators ein winkelkonstanter Luftspalt den zweiten ausgeprägten Pol von dem zweiten Statorpol trennt.

7. Aktuator gemäß Anspruch 6, wobei eine Außenfläche des zweiten ausgeprägten Pols, die dem zweiten Statorpol zugewandt ist, einen Krümmungsradius aufweist und die Außenfläche des zweiten Statorpols, die dem zweiten ausgeprägten Pol zugewandt ist, einen Krümmungsradius aufweist, und wobei die Krümmungsradien einen gemeinsamen Ursprung haben.

8. Aktuator gemäß Anspruch 7, wobei der gemeinsame Ursprung der Krümmungsradien die Drehachse ist.

9. Aktuator gemäß einem der Ansprüche 1-5, wobei in der geschlossenen Stellung des Aktuators ein sich winkelmäßig verändernder Luftspalt den zweiten ausgeprägten Pol vom zweiten Statorpol trennt.

10. Aktuator gemäß Anspruch 9, wobei eine Außenfläche des zweiten ausgeprägten Pols, die dem zweiten Statorpol zugewandt ist, einen Krümmungsradius aufweist und die Außenfläche des zweiten Statorpols, die dem zweiten ausgeprägten Pol zugewandt ist, einen Krümmungsradius aufweist, und wobei die Krümmungsradien keinen gemeinsamen Ursprung haben.

11. Aktuator gemäß einem der Ansprüche 1-10, wobei eine Spule der mindestens einen Spule um mindestens einen Teil des ersten Statorpols gewickelt ist und/oder die Spule um mindestens einen Teil des zweiten Statorpols gewickelt ist.

12. Aktuator gemäß einem der Ansprüche 1-11, wobei ein zweiter Rotor (80) des mindestens einen Rotors dazu ausgelegt ist, sich um eine Drehachse zu drehen; wobei der Rotor einen ersten ausgeprägten Pol, der sich über einen Winkel in Bezug auf die Drehachse erstreckt, und einen zweiten ausgeprägten Pol, der sich über einen Winkel in Bezug auf die Drehachse erstreckt, umfasst; wobei ein zweiter Stator (90) des mindestens einen Stators einen ersten Statorpol, der sich über einen Winkel in Bezug auf die Drehachse erstreckt, und einen zweiten Statorpol, der sich über einen Winkel erstreckt, umfasst; wobei in der offenen Stellung des Aktuators der erste ausgeprägte Pol nicht dem ersten Statorpol zugewandt ist und der zweite ausgeprägte Pol nicht dem zweiten Statorpol zugewandt ist; wobei in der geschlossenen Stellung des Aktuators der erste ausgeprägte Pol dem ersten Statorpol zugewandt ist und der zweite ausgeprägte Pol dem zweiten Statorpol zugewandt ist; wobei der erste ausgeprägte Pol, der zweite ausgeprägte Pol, der erste Statorpol und der zweite Statorpol jeweils ferromagnetisches Material umfassen; und wobei der erste ausgeprägte Pol (20) des ersten Rotors (10) von dem ersten ausgeprägten Pol des zweiten Rotors abgewandt ist und der zweite ausgeprägte Pol (30) des ersten Rotors (10) von dem zweiten ausgeprägten Pol des zweiten Rotors abgewandt ist.

13. Aktuator gemäß Anspruch 12, wobei die Drehachse des ersten Rotors die gleiche wie die Drehachse des zweiten Rotors ist.

14. Mittelspannungs-Leistungsschalter mit mindestens einem Vakuumunterbrecher, der jeweils mindestens einen bewegbaren elektrischen Kontakt zur elektrischen Leistungsunterbrechung aufweist, der über eine Hauptwelle betätigt wird, an der ein Aktuator gemäß einem der Ansprüche 1-13 angebracht ist.

## Revendications

1. Actionneur (1) destiné à un disjoncteur moyenne tension, l'actionneur comportant :
- au moins un rotor (10, 80) ;
- au moins un stator (40, 90) ; et
- au moins une bobine (70, 100) ;
le stator ou chacun des stators étant associé à un rotor correspondant parmi le ou les rotors ;
chaque stator n'encerclant pas entièrement circonférentiellement le rotor auquel il est associé ; et
la bobine ou chacune des bobines étant associée à un stator parmi le ou les stators ;
chaque bobine étant enroulée autour d'au moins une partie du stator auquel elle est associée ;
un angle de rotation de chaque rotor étant limité ;
un rotor (10) parmi le ou les rotors étant configuré pour tourner autour d'un axe de rotation ; le rotor comportant un premier pôle saillant (20) s'étendant sur un angle (a1) par rapport à l'axe de rotation et un second pôle saillant (30) s'étendant sur un angle (a2) par rapport à l'axe de rotation ; un stator (40) parmi le ou les stators comportant un premier pôle (50) de stator s'étendant sur un angle (a3) par rapport à l'axe de rotation et un second pôle (60) de stator s'étendant sur un angle (a4) par rapport à l'axe de rotation ; dans une position fermée de l'actionneur, le premier pôle saillant faisant face au premier pôle de stator et le second pôle saillant faisant face au second pôle de stator, et le premier pôle saillant, le second pôle saillant, le premier pôle de stator et le second pôle de stator comportant chacun un matériau ferromagnétique ;
**caractérisé en ce que** le premier pôle saillant est circonférentiellement contigu avec le second pôle saillant.

2. Actionneur selon la revendication 1, l'angle de rotation du rotor par rapport au stator étant limité par une force électromagnétique d'entraînement.

3. Actionneur selon l'une quelconque des revendications 1 à 2, dans une position ouverte de l'actionneur, le premier pôle saillant ne faisant pas face au premier pôle de stator et le second pôle saillant ne faisant pas face au second pôle de stator, de telle façon que l'étendue angulaire du premier pôle saillant ne se superpose pas sensiblement à l'étendue angulaire du premier pôle de stator et que l'étendue angulaire du second pôle saillant ne se superpose pas sensiblement à l'étendue angulaire du second pôle de stator.

4. Actionneur selon l'une quelconque des revendications 1 à 3, le rotor et le stator étant configurés de telle façon que le premier pôle saillant ne puisse pas faire face au second pôle de stator.

5. Actionneur selon l'une quelconque des revendications 1 à 4, lorsque l'actionneur est dans la position fermée, une partie du premier pôle saillant étant positionnée au voisinage d'une partie du second pôle de stator, et un rayon de l'axe de rotation à la partie du premier pôle saillant étant supérieur à un rayon de l'axe de rotation à la partie du second pôle de stator.

6. Actionneur selon l'une quelconque des revendications 1 à 5, un entrefer angulairement constant séparant le second pôle saillant du second pôle de stator lorsque l'actionneur est dans la position fermée.

7. Actionneur selon la revendication 6, une surface extérieure du second pôle saillant qui fait face au second pôle de stator présentant un rayon de courbure et la surface extérieure du second pôle de stator qui fait face au second pôle saillant présentant un rayon de courbure, et les rayons de courbure partageant une origine commune.

8. Actionneur selon la revendication 7, l'origine commune des rayons de courbure étant l'axe de rotation.

9. Actionneur selon l'une quelconque des revendications 1 à 5, un entrefer angulairement variable séparant le second pôle saillant du second pôle de stator lorsque l'actionneur est dans la position fermée.

10. Actionneur selon la revendication 9, une surface extérieure du second pôle saillant qui fait face au second pôle de stator présentant un rayon de courbure et la surface extérieure du second pôle de stator qui fait face au second pôle saillant présentant un rayon de courbure, et les rayons de courbure ne partageant pas une origine commune.

11. Actionneur selon l'une quelconque des revendications 1 à 10, une bobine parmi la ou les bobines enveloppant au moins une partie du premier pôle de stator et/ou la bobine enveloppant au moins une partie du second pôle de stator.

12. Actionneur selon l'une quelconque des revendications 1 à 11, un second rotor (80) parmi le ou les rotors étant configuré pour tourner autour d'un axe de rotation ; le rotor comportant un premier pôle saillant s'étendant sur un angle par rapport à l'axe de rotation et un second pôle saillant s'étendant sur un angle par rapport à l'axe de rotation ; un second stator (90) parmi le ou les stators comportant un premier pôle de stator s'étendant sur un angle par rapport à l'axe de rotation et un second pôle de stator s'étendant sur un angle ; dans la position ouverte de l'actionneur, le premier pôle saillant ne faisant pas face au premier pôle de stator et le second pôle saillant ne faisant pas face au second pôle de stator ; dans la position fermée de l'actionneur, le premier pôle saillant faisant face au premier pôle de stator et le second pôle saillant faisant face au second pôle de stator ; le premier pôle saillant, le second pôle saillant, le premier pôle de stator et le second pôle de stator comportant chacun un matériau ferromagnétique ; et le premier pôle saillant (20) du premier rotor (10) étant orienté à l'opposé du premier pôle saillant du second rotor, et le second pôle saillant (30) du premier rotor (10) étant orienté à l'opposé du second pôle saillant du second rotor.

13. Actionneur selon la revendication 12, l'axe de rotation du premier rotor étant le même que l'axe de rotation du second rotor.

14. Disjoncteur moyenne tension doté d'au moins un interrupteur sous vide, comportant chacun au moins un contact électrique mobile destiné à l'interruption d'une puissance électrique, manœuvré par l'intermédiaire d'un arbre principal sur lequel est monté un actionneur selon l'une quelconque des revendications 1 à 13.
